# EUROPEAN PATENT SPECIFICATION

(11) **EP 4 165 993 B1**
(45) Date of publication and mention of the grant of the patent: **12.08.2026**
(21) Application number: 22197221.9
(22) Date of filing: 24.05.2018
(51) Int. Cl.: A21B 3/13

(54) **A TRANSFORMABLE MOLD FOR PREPARING A FOOD ITEM**
UMWANDELBARE FORM ZUR HERSTELLUNG EINES NAHRUNGSMITTELS
MOULE TRANSFORMABLE POUR LA PRÉPARATION D'UN ALIMENT

(30) Priority: 26.05.2017 US 201762511556 P
(43) Date of publication of application: 19.04.2023
(62) Document number(s) of the earlier application(s) in accordance with Art. 76 EPC: 18731299.6 / 3 629 745
(73) Proprietor: Intercontinental Great Brands LLC, East Hanover, NJ 07936 (US)
(72) Inventor: SMITH, Jennifer, East Hanover, NJ 07936 (US)
(74) Representative: Boult Wade Tennant LLP

(56) References cited:
- WO-A1-2006/066349
- DE-U1- 202007 015 560

## Description

### FIELD

The disclosure relates generally to a mold, and more particularly, to a mold configured to transform between a stowed configuration and a ready-to-use configuration.

### BACKGROUND OF THE INVENTION

Traditionally, desserts such as cakes are prepared in metallic or glass baking dishes having a cavity for receiving the cake batter. Prepackaged mixes used to prepare a cake batter have substantially reduced the effort and materials required by a consumer to prepare a cake. To further accommodate a consumer, some of these prepackaged cake mixes, in particular for cakes that do not require cooking, i.e. cheesecake, mousse, etc, even provide a mold or dish within which the food may be prepared. The mold typically included is formed from a plastic material. Although suitable for its intended purpose, these plastic molds are rigid and therefore require a substantial amount of space within the package. In some instances, the size of the packaging is increased to accommodate storing the mold therein .

Accordingly, there is a desire, not only to reduce the total amount of space occupied by the mold within the package, but also to reduce the overall size of the package, and the material used to form the package. In addition, a reduction in the size of the mold and therefore the package, may decrease the environmental impact while increasing the shipping efficiency of the package.

WO-A-2006/066349 describes a food preparation mold comprising a base and a collar having a continuous wall that upstands from the base with the lower edge of the collar abutting the base. The collar wall incorporates a releasable connection to enable opening of the collar in the form of tabs.

DE-U-20200701560 discloses a foldable cake mold using a one piece substrate blank which can be folded into a heart shape.

### BRIEF DESCRIPTION OF EMBODIMENTS OF THE INVENTION

According to one embodiment of the invention, a method of forming a mold includes providing a primary member including at least one area for receiving a support member, providing at least one support member, connecting a first end and a second end of said primary member, and affixing said at least one support member to said at least one area for receiving a support member to maintain said primary member in a desired shape.

In addition to one or more of the features described above, in further embodiments said connecting of said first end and said second end without said at least one support member being affixed to said at least one area for receiving said support member results in a first shape of said primary member, and wherein said desired shape is different than said first shape.

In addition to one or more of the features described above, in further embodiments said first shape is generally angular.

In addition to one or more of the features described above, in further embodiments said desired shape is a generally continuous curve.

In addition to one or more of the features described above, in further embodiments said primary member and said at least one support member are separate from one another.

In addition to one or more of the features described above, in further embodiments said first end includes a first engagement member and said second end includes a second engagement member, said connecting said first end and said second end further comprises connecting said first engagement member and said second engagement member.

In addition to one or more of the features described above and according to the invention, said first engagement member and said second engagement member includes receiving a portion of said second engagement member within said first engagement member.

In addition to one or more of the features described above, in further embodiments affixing said at least one support member to said at least one area for receiving a support member includes inserting said at least one support member through a slot formed in said at least one area for receiving a support member.

In addition to one or more of the features described above, in further embodiments affixing said at least one support member to said at least one area for receiving a support member includes permanently affixing said at least one support member to said primary member.

In addition to one or more of the features described above, in further embodiments said at least one area for receiving a support member includes a fold line configured to bias said primary member into a first shape.

In addition to one or more of the features described above, in further embodiments affixing said at least one support member to said at least one area for receiving a support member counteracts said bias of said fold line.

In addition to one or more of the features described above, in further embodiments comprising positioning the mold adjacent a support surface to define a cavity for retaining a formable material.

According to another embodiment, a mold includes aa primary member having a coupled first end and second end and at least one area for receiving a support member. At least one support member is connected to the at least one area for receiving a support member of the primary member. The at least one support member opposes a bias of the primary member to maintain the primary member in a desired shape.

In addition to one or more of the features described above, in further embodiments said desired shape is generally circular.

In addition to one or more of the features described above, in further embodiments the mold is formed from a paper board.

In addition to one or more of the features described above, in further embodiments a first surface of the mold includes a food-safe material.

In addition to one or more of the features described above, in further embodiments said first surface of the mold includes a non-stick material.

In addition to one or more of the features described above, in further embodiments said at least one area for receiving a support member includes a fold line.

In addition to one or more of the features described above, in further embodiments said at least one support member is removably coupled to said primary member.

In addition to one or more of the features described above, in further embodiments comprising at least one slot formed in said at least one area for receiving a supporting member, wherein said supporting member extends through said at least one slot.

In addition to one or more of the features described above, in further embodiments said first end of said primary member includes a first engagement member and said second end of said primary member includes a second engagement member, said first engagement member being complementary to said second engagement member to couple said first end and second end.

In addition to one or more of the features described above, or as an alternative, in further embodiments said primary member defines a hollow cavity, said hollow cavity having being open at a first side and a second opposite side.

According to yet another embodiment, a blank of a forming system includes an elongated primary member and at least one support member attached to the primary member at a first area of said primary member. The at least one support member is configured for further attachment to the primary member at a second area of said primary member. The blank is maintained in a ready-to-use configuration when the at least one support member is affixed to the primary member at said second area.

In addition to one or more of the features described above, or as an alternative, in further embodiments wherein said at least one support member is connected to said primary member via a perforated interface.

In addition to one or more of the features described above, or as an alternative, in further embodiments said at least one support member is separated from said primary member before said at least one support member is affixed to said second area.

According to the invention, in further embodiments the blank is transformable between a stowed configuration and said ready-to-use configuration, said stowed configuration being different than said ready-to-use configuration.

In addition to one or more of the features described above, or as an alternative, in further embodiments the blank is transformable between said stowed configuration and said ready-to-use configuration without additional materials.

In addition to one or more of the features described above, or as an alternative, in further embodiments the blank is transformable into said stowed configuration by folding said elongated primary member about at least one fold line.

In addition to one or more of the features described above, or as an alternative, in further embodiments said at least one fold line includes a plurality of fold lines, the blank being folded about each of said plurality of fold lines in said stowed configuration.

In addition to one or more of the features described above, or as an alternative, in further embodiments said at least one fold line is formed at said second area of said primary member.

In addition to one or more of the features described above, in further embodiments the blank is transformable to said ready-to-use configuration by connecting a first end and a second end of said primary member and by mounting said at least one support member at said second area.

In addition to one or more of the features described above, in further embodiments the blank is formed from a paper board.

In addition to one or more of the features described above, in further embodiments a first surface of the blank includes a food-safe material.

According to yet another embodiment, a method of forming a mold includes providing a blank including a primary member having at least one fold formed therein and at least one area for receiving a support member, unfolding said blank about said at least one fold, connecting at least one support member to said primary member at said at least one area for receiving said support member, and connecting a first end of said primary member to a second end of said primary member such that a shape of said primary member is determined by a natural equal stress of said primary member.

In addition to one or more of the features described above, in further embodiments said connecting of said first end and said second end of said primary member without said at least one support member being connected to said at least one area for receiving said support member results in another shape, the another shape being different than said shape determined by said natural equal stress of said primary member.

In addition to one or more of the features described above, in further embodiments said another shape is generally angular.

In addition to one or more of the features described above, in further embodiments said first end includes a first engagement member and said second end includes a second engagement member, said connecting said first end and said second end further comprises connecting said first engagement member and said second engagement member.

In addition to one or more of the features described above, in further embodiments connecting said at least one support member to said at least one area for receiving a support member includes inserting said at least one support member through a slot formed in said at least one area for receiving a support member.

In addition to one or more of the features described above, in further embodiments said at least one area for receiving a support member includes said at least one fold configured to bias said primary member into another shape different from said shape determined by said natural equal stress of said primary member.

In addition to one or more of the features described above, in further embodiments connecting said at least one support member to said at least one area for receiving a support member counteracts said bias of said at least one fold line.

These and other examples not part of the invention and embodiments are described in detail below.

### BRIEF DESCRIPTION OF THE DRAWINGS

The accompanying drawings incorporated in and forming a part of the specification embodies several aspects of the present disclosure and, together with the description, serves to explain the principles of the present disclosure. In the drawings:
FIG. 1 is a perspective view of a ready-to-use mold positioned on a support surface according to an embodiment;
FIG. 2 is a perspective view of the transformable mold of FIG. 1 in a an un folded configuration according to an embodiment;
FIG. 3 is a plan view of the transformable mold of FIG. 1 during transformation between an unfolded configuration and a ready-to-use configuration;
FIG. 4A is a plan view of a support member of the transformation mold according to an embodiment;
FIG. 4B is a plan view of a support member assembled to the primary member according to an embodiment;
FIG. 4C is a plan view of an opposite side of the support member assembled to the primary member of FIG. 4B according to an embodiment;
FIG. 5 is a plan view of a mold in a ready-to-use configuration according to an embodiment;
FIG. 6 is a plan view of a blank in a stowed configuration according to an embodiment; and
FIG. 7 is a plan view of a blank in a partially unfolded configuration according to an embodiment.

The detailed description explains embodiments of the invention, together with advantages and features, by way of example with reference to the drawings.

### DETAILED DESCRIPTION OF THE INVENTION

Referring now to the FIGS., an example of a mold is illustrated. The mold illustrated and described herein may be used during the preparation of a consumable edible item, such as a cake for example. However, it should be understood that the mold may be suitable for use in other applications.

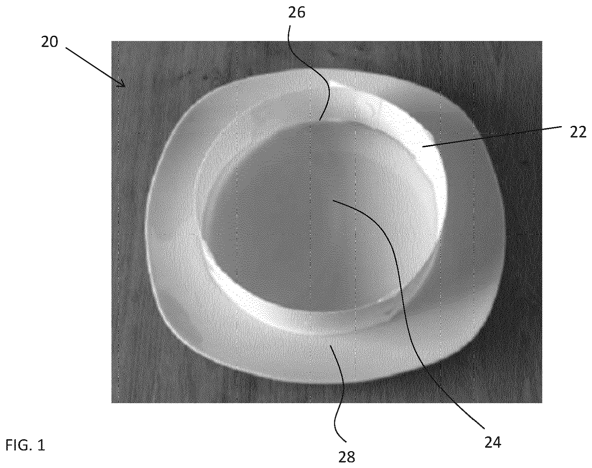

A ready-to-use mold 20, shown in FIG. 1, includes a side wall 22 defining a hollow interior cavity 24. In the illustrated, non-limiting embodiment, the mold 20 is generally circular in shape. However, a mold having another shape is also contemplated herein. In use, an edge 26 of the sidewall 22 is positioned in contact with a support surface 28 selected by a user. The support surface 28 may be defined by a plate (as shown in FIG. 1), baking sheet, or other suitable food-safe component. The support surface 28 abuts the edge 26 of the mold 20 about the periphery of the side wall 22 such that the support surface 28 functions as a base of the mold 20, thereby sealing an end of the hollow cavity 24. Accordingly, when the mold 20 is positioned adjacent a support surface, as shown in the FIG., the sidewall 22 and the support surface 28 cooperate to contain a formable edible material within the hollow cavity 24. As used herein, the term "formable material" is understood to include flowable materials, such as cake batter, as well as powdered materials, crumb like structures, and larger solids for example.

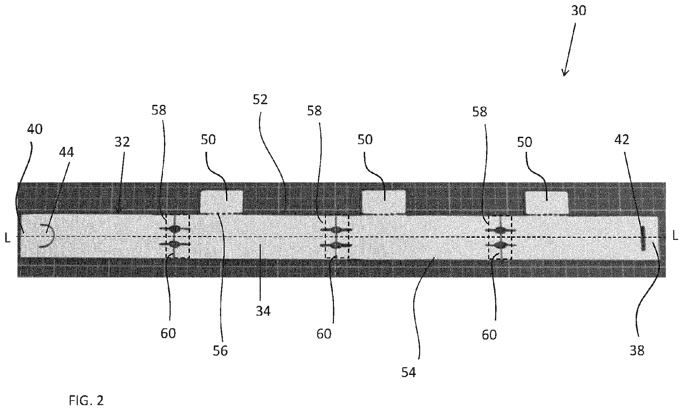

The mold 20 is formed by transforming a blank indicated generally at 30 in FIG. 2. The blank 30 may be made from any suitable material, including, but not limited to paper board. At least one surface of the blank 30 includes a food-safe material. In an embodiment, both a first surface and a second, opposite surface of the blank 30 are formed from a food-safe material. The food safe material may be integrated into the paper board, or alternatively, may be applied as a coating. The food-safe material may additionally include non-stick properties to allow the mold 30 to be easily removed from the food item after preparation thereof. In an embodiment, the food-safe, non-stick surface may be provided in the form of a lamination of aluminum foil, wax, or another non-stick coating. In embodiments where the food prepared within the mold 30 requires cooking, i.e. application of heat, both the blank 30 and the support surface 28 associated therewith are formed from suitable materials, such as microwave safe materials for example. In an embodiment, the first surface of the blank 30 intended to contact the formable material includes a coating that prevents or hinders the absorption of liquid into the material of the blank 30. However, embodiments where both the first surface and the second surface include such a coating are also contemplated herein.

With reference now to FIGS. 2-5, the blank 30 is illustrated in more detail. The blank 30 includes a generally elongated primary member 32 which in combination with one or more support members 50 (described in more detail below) forms the sidewall 22 of the mold 20. In the illustrated, non-limiting embodiment, the primary member 32 is rectangular in shape and has first and second major surfaces 34, 36, defined by a length and height of the primary member. The length may be selected to achieve a mold 20 having a cavity 24 of a desired dimension and the height is selected to extend beyond an upper surface of a formable material positioned within the cavity 24. However, other configurations of the primary member 32 are also contemplated herein.

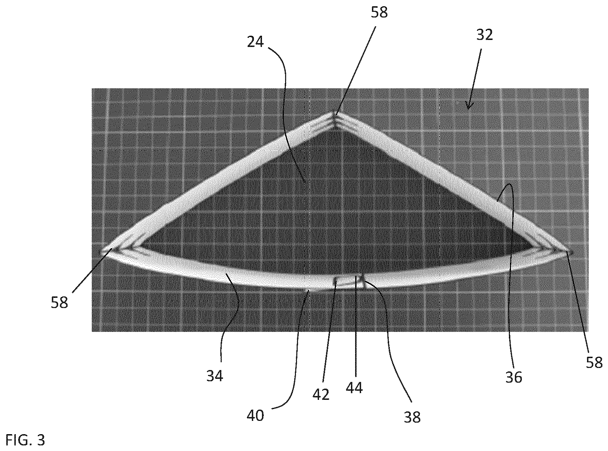

A first end 38 of the primary member 32 and a second, opposite end 40 of the primary member 32 are configured to couple to one another. In an embodiment, a first engagement member 42 is arranged adjacent the first end 38 and a second engagement member 44 is arranged adjacent the second end 40. The first and second engagement members 42, 44 are generally complementary to one another and cooperate to retain the primary member 32 in a configuration where that the cavity 24 of the mold 20 is defined by the first surface 34 of the primary member 32 (see FIG. 3).

The first and second engagement members 42, 44 may be operable to removably couple the first and second ends 38, 40, as shown in the FIGS., or alternatively, may be configured to permanently couple the ends 38, 40. The first and/or second engagement members 42, 44 may be affixed to a surface of the primary member 32, or alternatively, may be formed directly into the body of primary memberv32. In the illustrated, non-limiting embodiment, one of the first engagement member 42 and the second engagement member 44 includes an opening, such as a slot for example, formed in the primary member 32, and the other of the first engagement member 42 and the second engagement member 44 includes a tab receivable within the opening. It should be understood that any combination of first and second engagement members 42, 44 capable of affixing the ends 38, 40 of the primary member 32is within the scope of the disclosure.

The blank 30 additionally includes one or more support members 50. In the illustrated, non-limiting embodiment, three support members 50 are shown; however it should be understood that embdoiments having any number of support members are within the scope of the disclosure. As shown the one or more support members 50 may be attached to a portion of the primary member 32, such as to a first edge 52, or a second opposite edge 54 for example. The interface between the one or more support members 50 and the primary member 32 may be scored or perforated. As a result, the one or more support members 50 are easily separable from the primary member 32 along the perforated interface 56 without causing damage to either the support members 50 or the primary member 32. However, embodiments where the support members 50 are located separate from the primary member 32 are also contemplated herein.

Each of the one or more support members 50 is configured to mount to a portion of the primary member 32 to provide structural support to the primary member 32 at a desired area. In an embodiment, the areas for receiving a support member, illustrated schematically at 58 are arranged at locations where the rigidity of the primary member 32 along a longitudinal axis L, oriented parallel to the length of the primary member 32, is weakened or compromised. According to the invention, the primary member 32 of the blank 30 is formed having one or more creases 60 formed therein. As shown, the primary member 32 includes three creases, formed substantially equidistantly along the length of the primary member 32. However, embodiments having any number of creases 60 formed at any position are contemplated herein. Each of the creases 60 creates a bias in the contour of the primary member 32 when the first and second ends 38, 40 of the primary member 32 are coupled (FIG. 3). Accordingly, the one or more areas for receiving a support member 58 are in overlapping arrangement with the at least one crease 60.

In the illustrated, non-limiting embodiment, each of the support members 50 is generally rectangular in shape and has a height substantially equal to a height of the primary member. As shown, the corners of the support members 50 may be rounded to increase the ease of assembly, thereby reducing overall assembly time and potential user frustration. By forming the support members 50 with a substantially uniform shape, the support members 50 may be mounted to the primary member 32 in a variety of configurations (i.e. right side up, right side down etc...). In addition, in an embodiment, the length of the support member 50, measured parallel to the longitudinal axis L of the primary member 32, is generally larger than the crease 60. As a result, when the support member 50 is connected to the primary member 32 at an area for receiving a support member 58, the support member 50 generally overlaps a portion of the primary member 32 on both sides of the crease 60. By positioning the support member 50 directly adjacent the crease 60, the rigidity of the primary member 32 at the area for receiving a support member 58, and more particularly at the crease 60, is improved. As a result, the support member 50 may counteract or overcome the bias created in the contour of the primary member 32 formed by the crease 60. It should be understood that support members 50 of another size and shape are also contemplated herein. It should also be understood that both the support member 50 and the area for receiving the support member 58 may vary in proportion to the primary member 32 based on the flexibility of the materials being used.

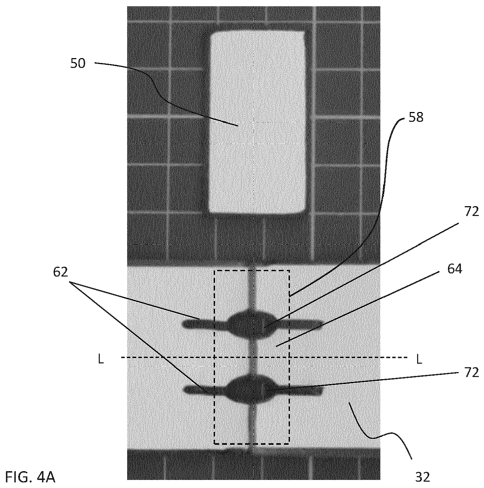

In an embodiment, the one or more support members 50 may be permanently affixed to the primary member 32, such as with an adhesive for example, at the areas for receiving a support member 58. Alternatively, the one or more support members 50 may be removably connected to the primary member 32. For example, one or more slots 62 may be formed at each area for receiving a support member 58. In the illustrated, non-limiting embodiment of FIG. 4A, multiple slots 62, oriented parallel to the longitudinal axis L, are formed in the primary member 32 at each area for receiving a support member 58 to define a retaining body 64 extending generally perpendicular to the crease 60. The retaining body 64 is configured to cooperate with the adjacent portion of the primary member 32 to restrict movement of the support member 50 relative to the primary member 32.

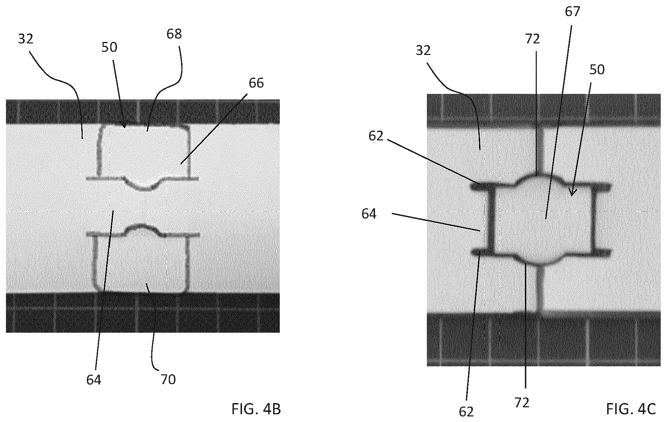

As shown in FIG. 4B, the support member 50 is insertable through the slots 62 formed in the primary member 32 such that the retaining body 64 is disposed adjacent a first surface 66 of the support member 50 and the body of the primary member 32 is arranged adjacent second, opposite surface 67(FIG. 4C) of the support member 50. Alternatively, in embodiments having a single slot 62 formed at each area for receiving a support member 58, the support member 50 may extend through the slot 62 such that a first end 68 of the support member 50 is arranged adjacent a first surface 34 of the primary member 32 and a second end 70 of the support member 50 is arranged adjacent the second, opposite surface 36 of the primary member 32. However, any mechanism or configuration suitable for coupling the support member 50 to the primary member 32 is within the scope of the disclosure.. In the illustrated, non-limiting embodiment, an opening 72 is formed in the primary member 32 adjacent each slot 62 to increase the ease of assembling the support members 50 to the primary member 32.

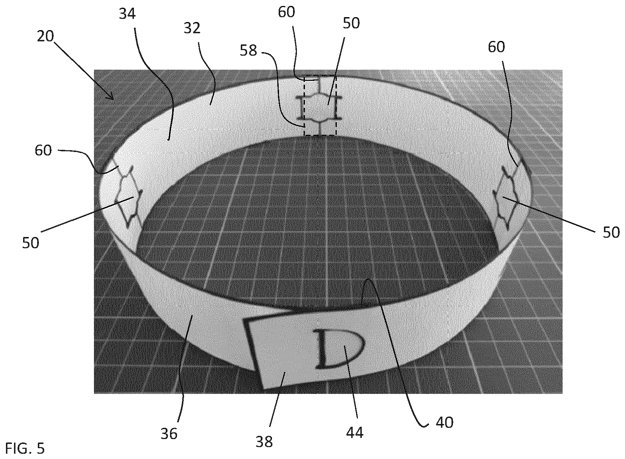

When the first and second ends 38, 40 of the primary member 32 are connected and each of the plurality of support members 50 is mounted to the primary member 32 at an area for receiving a support member 58, as shown in FIG. 5, a ready-to-use mold 20 is formed from the blank 30. It should be understood that when transforming the blank 30 to a ready to use mold 20, the at least one support member 50 may be coupled to area for receiving a support member 58 and then the first and second ends 38, 40 of the primary member 32 may be coupled. Alternatively, the first and second ends 38, 40 of the primary member 32 may be coupled prior to installation of the one or more support members 50.

When the first and second ends 38, 40 of the primary member 32 are coupled without any support members 50 connected thereto, the primary member 32 forms a first shape. Although the first shape has an equal stress, the first shape is distinguishable from a second shape of the primary member 32 formed by a natural equal stress. The second shape formed by a natural equal stress occurs when there are no weaknesses (i.e. folds or creases 60) in the primary member 32. Inclusion of the support members 50 at the creases 60 overcomes these weaknesses, such that when the first and second ends 38, 40 of the primary member 32 are coupled, the primary member 32 takes the second shape of natural equal stress.

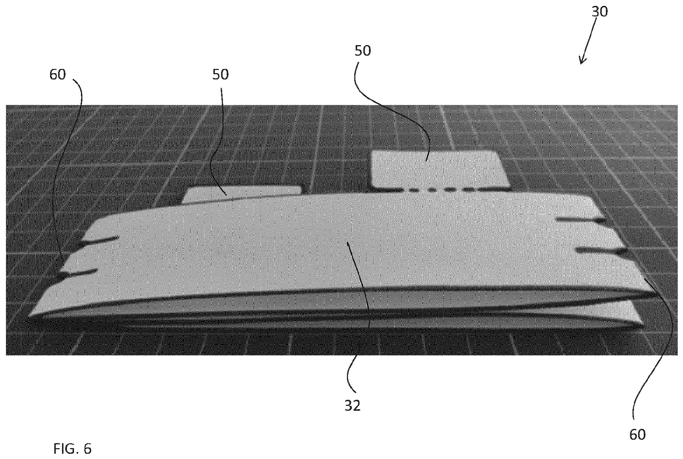

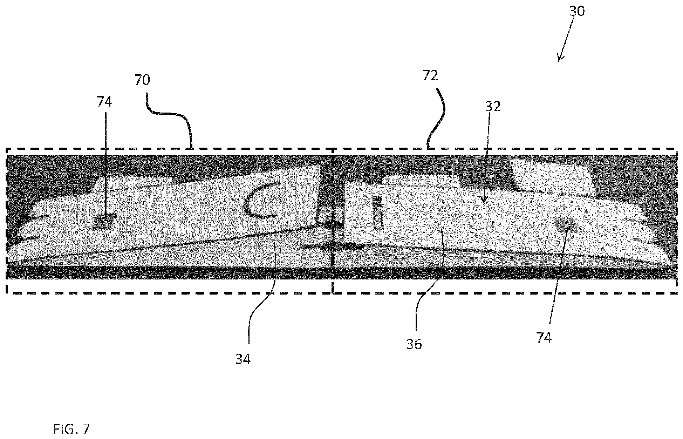

With reference now to FIGS. 6 and 7, the blank 30 may be adapted for storage within a container or package (not shown) substantially smaller than the blank 30. The blank 30 may be transformed into a "stowed" configuration by folding the blank 30 about the one or more creases 60 formed within the primary member 32. Accordingly, the positioning and total number of creases 60 formed in the blank 30 will vary based not only on the size of the desired ready to use mold 30, but also on the size of the packaging within which the blank 30 may be arranged.

An example of the blank 30 in a stowed configuration is illustrated in FIG. 6. **In** the stowed configuration, the primary member 32 of the blank 30 has been folded at each of the three creases 60 formed therein. **In** the stowed configuration, the length of the blank 30 is about a quarter of the length in an unfolded configuration (FIG. 2). As shown, the primary member 32 is folded about the crease 60 located adjacent the first end 38 and the crease 60 adjacent the second end 40 (see FIG. 7). Both folds are formed in a direction such that the first surface 34 of the primary member 32, such as the surface including the food safe and/or non-stick materials for example, is folded on top of itself. **In** the partially folded configuration of FIG. 7, the blank 30 is formed into a first half 70 and a second half 72. To transform the blank 30 from the partially folded to a stowed configuration, the partially folded blank 30 is additionally folded about a central crease 60 to position the first half 70 in overlapping alignment with the second half 72. **In** an embodiment, an adhesive 74 or another coupling mechanism may be arranged on the surface 36 of primary member 32 of at least one of the first half 70 and/or the second half 72 to retain the blank 30 in the stowed configuration. By folding the blank 30 such that the surface having the coating to prevent liquid absorption onto is in contact with itself, the adhesive or coupling mechanism 74 may be positioned on the second, opposite surface.

To transform the blank 30 from the stowed configured to a ready-to-use mold 20, a user must perform at least one unfolding operation, such as a first unfolding operation and a second unfolding operation, to achieve a blank in an unfolded configuration (FIG. 2). Once unfolded, the support members 50 must be attached to the primary member 32 at an area for receiving a support member 58, and the ends 38, 40 of the primary member 32 must be coupled to form a mold 20. The mold 20 may then be positioned adjacent any desired support surface 28 for use. As described herein, it should be understood that the blank 30 may be transformed from a stowed configuration into a ready-to-use mold 20 without requiring the use of additional materials or tools.

The mold 20 illustrated and described herein easy to assemble and disassemble and may be reusable. Further, because the mold is able to transition between a stowed configuration and a ready-to-use, the mold requires substantially less space in a package than conventional thermoplastic molds.

This written description uses examples to disclose the invention, including the best mode, and also to enable any person skilled in the art to make and use the invention. The patentable scope of the invention is defined by the claims, and may include other examples that occur to those skilled in the art.

## Claims

1. A method of forming a mold (20) from a blank (30), comprising:
providing a primary member (32) including at least one area for receiving a support member (50), the primary member (32) including a first end (38), a second opposite end (40) and at least one crease (60), the at least one area for receiving said support member (50) being substantially aligned with or in overlapping arrangement with said at least one crease (60); each of the creases 60 creates a bias in the contour of the primary member (32) when the first and second ends (38, 40) of the primary member (32) are coupled;
transforming the blank (30) from a stowed configuration by unfolding the primary member (32) about the at least one crease (60), wherein a length of the primary member (32) in the stowed configuration is less than a length of the primary member (32) when unfolded;
providing at least one support member (50);
connecting a first end (38) and a second end (40) of said primary member (32);
affixing said at least one support member (50) to said at least one area for receiving a support member (50) to form a sidewall of the mold (32), wherein affixing said at least one support member (50) to said at least one area for receiving a support member provides structural support to said primary member to maintain said primary member (32) in a desired shape;
**characterised in that** said affixing includes positioning said at least one support member (50) directly adjacent to said at least one crease (60) formed in said primary member (32) with the at least one support member (50) overlapping a portion of the primary member (32) on both sides of the crease (60), to oppose a bias of said primary member (32).

2. The method of claim 1, wherein said connecting of said first end (38) and said second end (40) without said at least one support member (50) being affixed to said at least one area for receiving said support member (50) results in a first shape of said primary member (32), and wherein said desired shape is different than said first shape.

3. The method of claim 2, wherein said first shape is generally angular.

4. The method of claim 1, wherein said desired shape is a generally continuous curve.

5. The method of claim 1, wherein said primary member (32) and said at least one support member (50) are separate from one another.

6. The method of claim 1, wherein said first end (38) includes a first engagement member (42) and said second end (40) includes a second engagement member (44), said connecting said first end (38) and said second end (40) further comprises connecting said first engagement member (42) and said second engagement member (44).

7. The method of claim 6, wherein connecting said first engagement member (42) and said second engagement member (44) includes receiving a portion of said second engagement member (44) within said first engagement member (42).

8. The method of claim 1, wherein affixing said at least one support member (50) to said at least one area for receiving a support member (50) includes inserting said at least one support member (50) through a slot (62) formed in said at least one area for receiving a support member (50).

9. The method of claim 1, wherein affixing said at least one support member (50) to said at least one area for receiving a support member (50) includes permanently affixing said at least one support member (50) to said primary member (32).

10. The method of claim 1, wherein said at least one area for receiving a support member (50) includes a fold line configured to bias said primary member into a first shape.

11. The method of claim 10, wherein affixing said at least one support member (50) to said at least one area for receiving a support member (50) counteracts said bias of said fold line.

12. The method of claim 1, further comprising positioning the mold (20) adjacent a support surface to define a cavity (24) for retaining a formable material.

13. A mold (20) produced by the method of any one of the preceding claims.

14. The mold (20) of claim 13, wherein said desired shape is generally circular.

15. The mold (20) of claim 13, wherein the mold (20) is formed from a paper board.

16. The mold (20) of claim 13, wherein a first surface of the mold (20) includes a food-safe material.

17. The mold (20) of claim 16, wherein said first surface of the mold (20) includes a non-stick material.

18. The mold (20) of claim 13, wherein said at least one area for receiving a support member (50) includes a fold line.

19. The mold (20) of claim 13, wherein said at least one support member (50) is removably coupled to said primary member (32).

20. The mold (20) of claim 13, further comprising at least one slot (62) formed in said at least one area for receiving a supporting member (50), wherein said supporting member (50) extends through said at least one slot (62).

21. The mold (20) of claim 13, wherein said first end (38) of said primary member (32) includes a first engagement member (42) and said second end (40) of said primary member (32) includes a second engagement member (44), said first engagement member (42) being complementary to said second engagement member (44) to couple said first end (38) and second end (40).

22. The mold (20) of claim 13, wherein said primary member (32) defines a hollow cavity (24), said hollow cavity (24) having being open at a first side and a second opposite side.

## Patentansprüche

1. Verfahren zum Herstellen einer Form (20) aus einem Rohling (30), umfassend:
Bereitstellen eines Hauptelements (32), das mindestens einen Bereich zur Aufnahme eines Stützelements (50) einschließt, wobei das Hauptelement (32) ein erstes Ende (38), ein zweites, gegenüberliegendes Ende (40) und mindestens eine Falz (60) aufweist, wobei der mindestens eine Bereich zur Aufnahme des Stützelements (50) im Wesentlichen mit der mindestens einen Falz (60) ausgerichtet oder in überlappender Anordnung mit dieser ist; jede der Falzen 60 eine Vorspannung in der Kontur des Hauptelements (32) erzeugt, wenn das erste und das zweite Ende (38, 40) des Hauptelements (32) gekoppelt sind;
Überführen des Rohlings (30) aus einer verstauten Konfiguration durch Entfalten des Hauptelements (32) um die mindestens eine Falz (60), wobei eine Länge des Hauptelements (32) in der verstauten Konfiguration geringer ist als eine Länge des Hauptelements (32) im entfalteten Zustand;
Bereitstellen mindestens eines Stützelements (50);
Verbinden des ersten Endes (38) und zweiten Endes (40) des Hauptelements (32);
Befestigen des mindestens einen Stützelements (50) an dem mindestens einen Bereich zur Aufnahme eines Stützelements (50), um eine Seitenwand der Form (32) zu bilden, wobei das Befestigen des mindestens einen Stützelements (50) an dem mindestens einen Bereich zur Aufnahme eines Stützelements dem Hauptelement strukturelle Unterstützung bereitstellt, um das Hauptelement (32) in einer gewünschten Form zu halten;
**dadurch gekennzeichnet, dass** das Befestigen das Positionieren des mindestens einen Stützelements (50) direkt angrenzend an die mindestens eine in dem Hauptelement (32) ausgebildete Falz (60) einschließt, wobei das mindestens eine Stützelement (50) einen Abschnitt des Hauptelements (32) auf beiden Seiten der Falz (60) überlappt, um einer Vorspannung des Hauptelements (32) entgegenzuwirken.

2. Verfahren nach Anspruch 1, wobei das Verbinden des ersten Endes (38) und des zweiten Endes (40), ohne dass das mindestens eine Stützelement (50) an dem mindestens einen Bereich zur Aufnahme des Stützelements (50) befestigt ist, zu einer ersten Form des Hauptelements (32) führt, und wobei sich die gewünschte Form von der ersten Form unterscheidet.

3. Verfahren nach Anspruch 2, wobei die erste Form im Allgemeinen winklig ist.

4. Verfahren nach Anspruch 1, wobei die gewünschte Form eine im Allgemeinen kontinuierliche Kurve ist.

5. Verfahren nach Anspruch 1, wobei das Hauptelement (32) und das mindestens eine Stützelement (50) voneinander getrennt sind.

6. Verfahren nach Anspruch 1, wobei das erste Ende (38) ein erstes Eingriffselement (42) einschließt und das zweite Ende (40) ein zweites Eingriffselement (44) einschließt, wobei das Verbinden des ersten Endes (38) und zweiten Endes (40) ferner das Verbinden des ersten Eingriffselements (42) und zweiten Eingriffselements (44) umfasst.

7. Verfahren nach Anspruch 6, wobei das Verbinden des ersten Eingriffselements (42) und des zweiten Eingriffselements (44) das Aufnehmen eines Abschnitts des zweiten Eingriffselements (44) innerhalb des ersten Eingriffselements (42) umfasst.

8. Verfahren nach Anspruch 1, wobei das Befestigen des mindestens einen Stützelements (50) an dem mindestens einen Bereich zur Aufnahme eines Stützelements (50) das Einführen des mindestens einen Stützelements (50) durch einen Schlitz (62) einschließt, der in dem mindestens einen Bereich zur Aufnahme eines Stützelements (50) ausgebildet ist.

9. Verfahren nach Anspruch 1, wobei das Befestigen des mindestens einen Stützelements (50) an dem mindestens einen Bereich zur Aufnahme eines Stützelements (50) das dauerhafte Befestigen des mindestens einen Stützelements (50) an dem Hauptelement (32) einschließt.

10. Verfahren nach Anspruch 1, wobei der mindestens eine Bereich zur Aufnahme eines Stützelements (50) eine Falzlinie einschließt, die konfiguriert ist, um das Hauptelement in eine erste Form vorzuspannen.

11. Verfahren nach Anspruch 10, wobei das Befestigen des mindestens einen Stützelements (50) an dem mindestens einen Bereich zur Aufnahme eines Stützelements (50) der Vorspannung der Falzlinie entgegenwirkt.

12. Verfahren nach Anspruch 1, ferner umfassend das Positionieren der Form (20) neben einer Stützoberfläche, um einen Hohlraum (24) zum Zurückbehalten eines formbaren Materials zu definieren.

13. Form (20), hergestellt durch das Verfahren nach einem der vorstehenden Ansprüche.

14. Form (20) nach Anspruch 13, wobei die gewünschte Form im Allgemeinen kreisförmig ist.

15. Form (20) nach Anspruch 13, wobei die Form (20) aus einer Pappe gebildet ist.

16. Form (20) nach Anspruch 13, wobei eine erste Oberfläche der Form (20) ein lebensmittelechtes Material einschließt.

17. Form (20) nach Anspruch 16, wobei eine erste Oberfläche der Form (20) ein Antihaftmaterial einschließt.

18. Form (20) nach Anspruch 13, wobei der mindestens eine Bereich zur Aufnahme eines Stützelements (50) eine Falzlinie einschließt.

19. Form (20) nach Anspruch 13, wobei das mindestens eine Stützelement (50) lösbar mit dem Hauptelement (32) gekoppelt ist.

20. Form (20) nach Anspruch 13, ferner umfassend mindestens einen Schlitz (62), der in dem mindestens einen Bereich zur Aufnahme eines Stützelements (50) ausgebildet ist, wobei sich das Stützelement (50) durch den mindestens einen Schlitz (62) erstreckt.

21. Form (20) nach Anspruch 13, wobei das erste Ende (38) des Hauptelements (32) ein erstes Eingriffselement (42) einschließt und das zweite Ende (40) des Hauptelements (32) ein zweites Eingriffselement (44) einschließt, wobei das erste Eingriffselement (42) komplementär zu dem zweiten Eingriffselement (44) ist, um das erste Ende (38) und das zweite Ende (40) zu koppeln.

22. Form (20) nach Anspruch 13, wobei das Hauptelement (32) einen hohlen Hohlraum (24) definiert, wobei der hohle Hohlraum (24) an einer ersten Seite und einer zweiten, gegenüberliegenden Seite offen ist.

## Revendications

1. Procédé de formation d'un moule (20) à partir d'une ébauche (30), comprenant :
la fourniture d'un élément primaire (32) comportant au moins une zone destinée à recevoir un élément de support (50), l'élément primaire (32) comportant une première extrémité (38), une seconde extrémité opposée (40) et au moins un pli (60), l'au moins une zone destinée à recevoir ledit élément de support (50) étant sensiblement alignée avec ledit au moins un pli (60) ou en chevauchement avec celui-ci ; chacun des plis 60 crée un biais dans le contour de l'élément primaire (32) lorsque les première et seconde extrémités (38, 40) de l'élément primaire (32) sont accouplées ;
la transformation de l'ébauche (30) à partir d'une configuration repliée en dépliant l'élément primaire (32) autour de l'au moins un pli (60), dans lequel une longueur de l'élément primaire (32) dans la configuration repliée est inférieure à une longueur de l'élément primaire (32) lorsqu'il est déplié ;
la fourniture d'au moins un élément de support (50) ;
la liaison d'une première extrémité (38) et d'une seconde extrémité (40) dudit élément primaire (32) ;
la fixation dudit au moins un élément de support (50) à ladite au moins une zone destinée à recevoir un élément de support (50) pour former une paroi latérale du moule (32), dans lequel la fixation dudit au moins un élément de support (50) à ladite au moins une zone destinée à recevoir un élément de support fournit un support structurel audit élément primaire pour maintenir ledit élément primaire (32) dans une forme souhaitée ;
**caractérisé en ce que** ladite fixation comporte le positionnement dudit au moins un élément de support (50) directement adjacent audit au moins un pli (60) formé dans ledit élément primaire (32), l'au moins un élément de support (50) chevauchant une partie de l'élément primaire (32) de part et d'autre du pli (60), pour s'opposer à un biais dudit élément primaire (32).

2. Procédé selon la revendication 1, dans lequel ladite liaison de ladite première extrémité (38) et de ladite seconde extrémité (40) sans que ledit au moins un élément de support (50) ne soit fixé à ladite au moins une zone destinée à recevoir ledit élément de support (50) conduit à une première forme dudit élément primaire (32), et dans lequel ladite forme souhaitée est différente de ladite première forme.

3. Procédé selon la revendication 2, dans lequel ladite première forme est généralement rectangulaire.

4. Procédé selon la revendication 1, dans lequel ladite forme souhaitée est une courbe généralement continue.

5. Procédé selon la revendication 1, dans lequel ledit élément primaire (32) et ledit au moins un élément de support (50) sont séparés l'un de l'autre.

6. Procédé selon la revendication 1, dans lequel ladite première extrémité (38) comporte un premier élément de mise en prise (42) et ladite seconde extrémité (40) comporte un second élément de mise en prise (44), ladite liaison de ladite première extrémité (38) et de ladite seconde extrémité (40) comprend en outre la liaison dudit premier élément de mise en prise (42) et dudit second élément de mise en prise (44).

7. Procédé selon la revendication 6, dans lequel la liaison dudit premier élément de mise en prise (42) et dudit second élément de mise en prise (44) comporte la réception d'une partie dudit second élément de mise en prise (44) au sein dudit premier élément de mise en prise (42).

8. Procédé selon la revendication 1, dans lequel la fixation dudit au moins un élément de support (50) à ladite au moins une zone destinée à recevoir un élément de support (50) comporte l'insertion dudit au moins un élément de support (50) à travers une fente (62) formée dans ladite au moins une zone destinée à recevoir un élément de support (50).

9. Procédé selon la revendication 1, dans lequel la fixation dudit au moins un élément de support (50) à ladite au moins une zone destinée à recevoir un élément de support (50) comporte la fixation à demeure dudit au moins un élément de support (50) audit élément primaire (32).

10. Procédé selon la revendication 1, dans lequel ladite au moins une zone destinée à recevoir un élément de support (50) comporte une ligne de pliage conçue pour solliciter ledit élément primaire dans une première forme.

11. Procédé selon la revendication 10, dans lequel la fixation dudit au moins un élément de support (50) à ladite au moins une zone destinée à recevoir un élément de support (50) contrebalance ledit biais de ladite ligne de pliage.

12. Procédé selon la revendication 1, comprenant en outre le positionnement du moule (20) adjacent à une surface de support pour définir une cavité (24) destinée à retenir un matériau formable.

13. Moule (20) produit par le procédé selon l'une quelconque des revendications précédentes.

14. Moule (20) selon la revendication 13, dans lequel ladite forme souhaitée est généralement circulaire.

15. Moule (20) selon la revendication 13, dans lequel le moule (20) est formé à partir d'un carton.

16. Moule (20) selon la revendication 13, dans lequel une première surface du moule (20) comporte un matériau de qualité alimentaire.

17. Moule (20) selon la revendication 16, dans lequel ladite première surface du moule (20) comporte un matériau anti-adhésif.

18. Moule (20) selon la revendication 13, dans lequel ladite au moins une zone destinée à recevoir un élément de support (50) comporte une ligne de pliage.

19. Moule (20) selon la revendication 13, dans lequel ledit au moins un élément de support (50) est accouplé de manière amovible audit élément primaire (32).

20. Moule (20) selon la revendication 13, comprenant en outre au moins une fente (62) formée dans ladite au moins une zone destinée à recevoir un élément de support (50), dans lequel ledit élément de support (50) s'étend à travers ladite au moins une fente (62).

21. Moule (20) selon la revendication 13, dans lequel ladite première extrémité (38) dudit élément primaire (32) comporte un premier élément de mise en prise (42) et ladite seconde extrémité (40) dudit élément primaire (32) comporte un second élément de mise en prise (44), ledit premier élément de mise en prise (42) étant complémentaire audit second élément de mise en prise (44) pour accoupler ladite première extrémité (38) et ladite seconde extrémité (40).

22. Moule (20) selon la revendication 13, dans lequel ledit élément primaire (32) définit une cavité creuse (24), ladite cavité creuse (24) ayant été ouverte au niveau d'un premier côté et d'un second côté opposé.
